(19) Europäisches Patentamt

European Patent Office

Office européen des brevets

(11) **EP 1 049 048 A1**

(12) **EUROPEAN PATENT APPLICATION**
published in accordance with Art. 158(3) EPC

(43) Date of publication:
02.11.2000 Bulletin 2000/44

(51) Int. Cl.$^7$: **G06T 17/00**

(21) Application number: 98961386.4

(86) International application number:
**PCT/JP98/05710**

(22) Date of filing: 17.12.1998

(87) International publication number:
**WO 99/34334 (08.07.1999 Gazette 1999/27)**

(84) Designated Contracting States:
**DE FR GB NL**

(30) Priority: 25.12.1997 JP 35820197

(71) Applicant: **Hudson Co., Ltd**
**Sapporo-shi, Hokkaido 062-0933 (JP)**

(72) Inventor: **Kaneko, Kiyoshi**
**Chuou-ku, Tokyo 104-8446 (JP)**

(74) Representative: **HOFFMANN - EITLE**
**Patent- und Rechtsanwälte**
**Arabellastrasse 4**
**81925 München (DE)**

(54) **IMAGE OUTPUT DEVICE**

(57)    The invention relates an image output apparatus and the object thereof is to enable output image data to be edited as desired through a simple arrangement.

The apparatus includes a memory 20 for storing image data; a function generator 40 which, in sync with control for reading out the image data to an output XY plane, generates a predetermined function H(x,y) at a desired position in the XY address space; and an image data processor 30 which, on the basis of the value of the function H(x,y), subjects output image data g of a corresponding address space to image processing that corresponds to the value of the function. A variety of image processing applied to the output image data g is executed in real time in accordance with the value of the function H(x,y) generated at a desired position in sync with control for XY read-out of the image data to the output XY plane.

FIG. 1

**Description**

Technical Field

This invention relates to an image output apparatus and, more particularly, to an image output apparatus for outputting image data, which is supplied via a communication line or an image storage medium such as memory or video disk, to an output medium such as a display screen or recording paper

An image output apparatus of this kind is ideal for use in a personal computer, a game machine that relies upon a 2D/3D CG system, a printer or a facsimile machine, etc.

Background Art

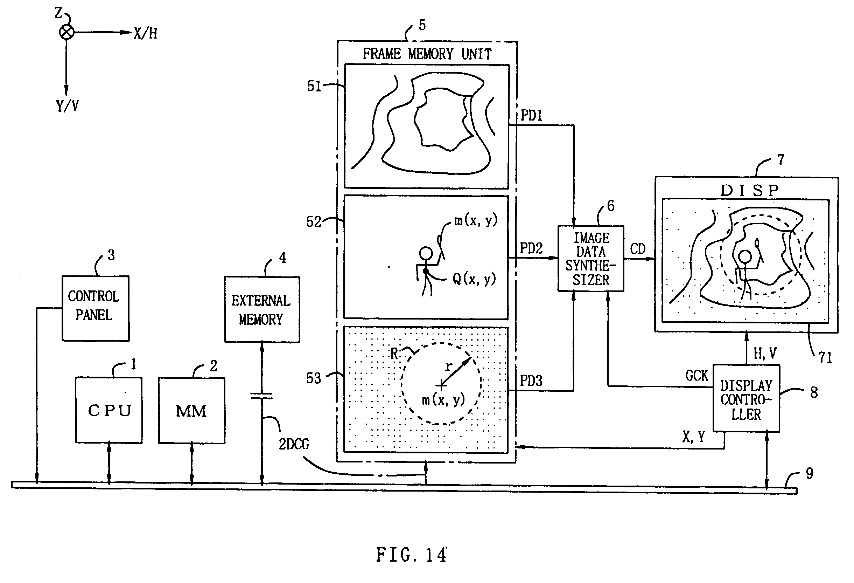

Fig. 14 is a diagram useful in describing the prior art and illustrates the construction of a conventional game machine.

Shown in Fig. 14 are a CPU 1 for executing main control and processing of the game machine; a main memory (MM) 2 comprising a RAM, ROM, HDD, etc., used by the CPU 1; a control panel 3 having various control keys and position input means such as a cross-hairs key, mouse and joystick; an external memory 4 comprising a ROM, CD-ROM, etc., provided on the main body of the game machine in freely removable fashion and storing a game program (a processing procedure, image data, etc.); a frame memory unit 5 having frame memories for a plurality of frames; a frame memory 51 for storing primarily image data such as background that does not undergo control by the user; a frame memory 52 for storing primarily image data of a hero or object (a racing car, fighter plane or other item) that does undergo control by the user; a frame memory 53 which stores primarily image data for the purpose of on-screen editing and comprising speech uttered by the hero for being superimposed on the display screen, and darkness which surrounds a torch or the like; an image data synthesizer 6 for combining the image data PD1-PD3 of the frame memories 51 - 53; a display unit (DISP) 7 comprising a CRT, LCD or the like; a display screen 71 of the display unit; a display controller 8 for generating an image-data read-out address (X,Y) and a required timing signal (pixel clock signal GCK, etc.) in sync with display control (V,H) of the display screen 71; and a common bus 9 of the CPU 1. Furthermore, data of a monochrome image or color image is handled as the image data.

Fig. 14 represents one scene in which the hero is exploring the inside of a case while holding a torch. This falls within a game making category of the type in which the background (the cave) is kept stationary on the screen and the hero is moved or the hero is kept stationary on the screen and the background is moved (panned); either scheme may be used. Here a case where the background is held stationary on the screen and the hero is moved will be described.

As the game proceeds, the CPU 1 reads the cave image data (2D CG) out of the external memory 4 and writes it to the frame memory 51. Next, the CPU 1 reads out the hero image data and develops this data about coordinates $Q(x,y)$ in the frame memory 52. The coordinates $Q(x,y)$ are the coordinates of the present position of the hero, whose movement is controlled by the control panel 3, on the display screen 71. Next, the CPU 1 reads out image data of a darkness pattern and develops this data about coordinates $m(x,y)$ in the frame memory 53. The coordinates $m(x,y)$ are the coordinates of the present position of the center of a torch (flame), which moves together with the hero, on the display screen 71. It should be noted that the image data of the cave and that of the hero in this scene has been formed by brightness that is somewhat dim. Further, the image data of the darkness pattern is transparent inside a circle R of radius r the center of which is the coordinates $m(x,y)$, and is dark (black) outside the circle.

The image data synthesizer 6 generates combined data CD by executing processing to superimpose, pixel by pixel, the image data PD1 - PD3 in the frame memories 51 - 53. More specifically, the image data synthesizer 6 reads pixel data $pd_1$ - $pd_3$ out of a common XY address in unison as the display address (X,Y) advances. In case of pixel data $pd_2 \neq 0$ (a position superimposed on the hero), background pixel data $pd_1$ is replaced by the hero pixel data $pd_2$. In case of pixel data $pd3 \neq 0$ (a position superimposed on darkness), the background or hero pixel data $pd1/pd2$ is replaced by darkness pixel data $pd_3$. By virtue of such combining processing, there is obtained combined image data CD in which the area surrounding the torch appears comparatively bright on the whole and the cave and hero can be seen in this area, whereas there is darkness outside of this area and nothing can be seen there. This data is displayed on the display screen 71.

With a game program of this kind, the user is capable of moving the hero in any direction by manipulating keys. Accordingly, it is required that the game machine move the hero and darkness pattern on the screen in accordance with manipulation of keys by the user. If it is assumed that the hero has been moved to the right side of the screen, for example, the CPU 1 moves the hero in frame memory 52 to the right side of the memory (or develops the hero again) and moves the darkness pattern in frame memory 53 to the right side of the memory (or develops the pattern again). As a result, the hero and the image of the area illuminated by the torch move to the right of the screen on the next screen.

In this scene, therefore, it will suffice if the external memory 4 stores one screen of cave image data, image data of the portion in which the hero holds the torch and image data of the darkness pattern (this is more than one frame's worth because the darkness pattern moves), so that a variety of screens which are changed irregularly by user operation can be generated efficiently and at high speed with a small number of original pictures. In addition, the burden upon the game manufacturer to produce original pictures is alleviated.

In accordance with the conventional method described above, however, it is required that the game machine have frame memories for three screens, as a result of which the cost of the apparatus rises. In particular, a color image requires a memory capacity which is three times that needed for black and white, and this is not negligible even for a single screen's worth of frame memory.

Further, it is required that the game manufacturer prepare original pictures of various edited patterns in accordance with the scene. This represents additional load. Moreover, this puts pressure upon the storage space of the external memory 4.

Furthermore, it is required that the CPU 1 reprocess the two screen's worth of image data PD2, PD3 whenever the user performs an operation. This increases the processing load.

Disclosure of the Invention

The present invention has been devised in view of the problems of the prior art mentioned above and an object thereof is to provide an image output apparatus that is capable of editing output image data in a desired manner through a simple arrangement.

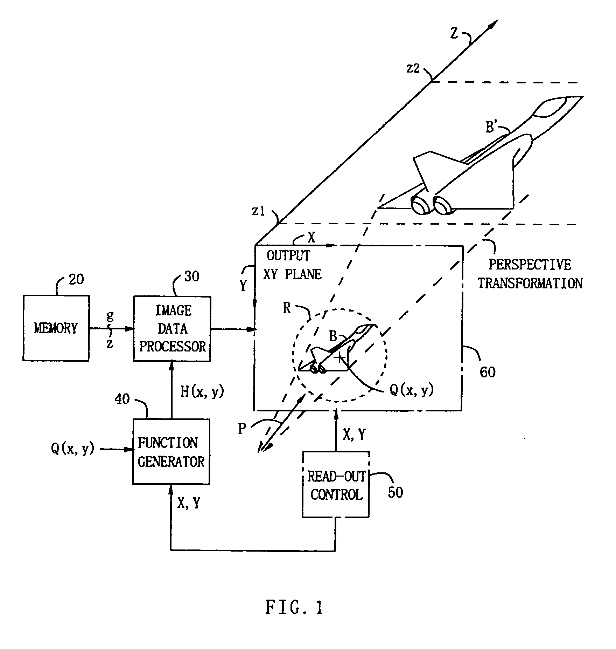

The foregoing object is attained by the arrangement shown in Fig. 1. Specifically, an image output apparatus according to claim (1) of the present invention comprises a memory 20 for storing image data; a function generator 40 which, in sync with control for reading out the image data to an output XY plane 60, generates a predetermined function H(x,y) at a desired position in the XY address space; and an image data processor 30 which, on the basis of the value of the function H(x,y), subjects output image data g of a corresponding address space to image processing that corresponds to the value of the function.

In accordance with claim (1) of the present invention, image data g of a desired area in an output image can be subjected to image processing in a desired manner by a simple arrangement in which image processing of the corresponding output image data g is executed in real time in accordance with the value of the function H(x,y) generated at a desired position in sync with control for XY read-out of the image data. Accordingly, a frame memory for the purpose of image editing required in the prior art can be eliminated, thereby reducing the cost of the apparatus. Further, an original picture for the purpose of image editing in a game machine can be eliminated, thereby producing a commensurate amount of leeway in the external memory 4 and making it possible to lighten original-picture production load. In addition, it is unnecessary for the CPU 1 to execute image processing for the purpose of image editing in a frame memory, thereby reducing the processing load on the CPU 1.

Preferably, in claim (2) of the present invention, the image data in claim (1) of the present invention is image data of an image (a fighter plane) B obtained by subjecting an image (a fighter plane) B' in three-dimensional space to a perspective transformation in relation to the output XY plane 60. Accordingly, even an image based upon 3D CG can be subjected to suitable image editing processing, without sacrificing the three-dimensional effect, by simple two-dimensional control and processing in accordance with claim (1) of the present invention.

Preferably, in claim (3) of the present invention, the function H(x,y) in claim (1) or (2) of the present invention is generated using externally input coordinates Q(x,y) in the output XY plane as a reference.

In accordance with claim (3) of the present invention, an area R of the function H(x,y) is generated in real time at a desired position in the output XY plane and image processing inside/outside the area R is executed in a desired manner by an arrangement in which, through simple control that involves merely externally designating the coordinates Q(x,y) in the output XY plane, the predetermined function H(x,y) is generated using this position as a reference.

Preferably, in claim (4) of the present invention, coordinates Q(x,y) in claim (3) of the present invention are detected coordinates P(x,y) of a fixation point of the human eye with respect to the output XY plane 60.

In accordance with claim (4) of the present invention, consider a case where the user is currently pursuing the fighter plane B. During pursuit, the user follows primarily the target B by eye. Accordingly, the area R is generated based upon the detected coordinates P(x,y) of the user's fixation point and it becomes possible to display, in real time, the image (fighter plane B) inside the area R clearly while the image outside this area is blurred. If the user shifts his eye to other items (another fighter plane or instruments, etc.), the area R generated also shifts in real time with movement of the fixation point and the image of this area is displayed clearly.

Preferably, in claim (5) of the present invention, the coordinates Q(x,y) in claim (3) of the present invention are coordinates C(x,y) of a point designated by external position input means.

In accordance with claim (5) of the present invention, consider a case where the user is currently pursuing the fighter plane B in a manner similar to that described above. The user controls a cursor (aiming device) or control stick (direction and attitude of his own plane), in such a manner that the enemy plane B will be acquired by the aiming device (not shown) on the screen, by operating cursor keys (cross-hair key, etc.) on the control panel or by operating the control stick. In this case also the area R is generated automatically based upon the coordinates C(x,y) of the designated point (aiming device) controlled based upon manipulation of the cursor, and it is possible to display, in real time, the image (fighter plane B) inside the area R clearly while the image outside this area is blurred.

Alternatively, by generating the area R based upon the coordinates C(x,y) of a designated point controlled based upon manipulation of a control stick [though in this case, as a result of a change in the direction and attitude of the user's own plane, the screen is controlled in such a manner that the enemy plane B is always acquired at a designated point (e.g., aiming device) in the center of the screen], it is possible to display, in real time, an image (the enemy plane B) that falls inside the stationary area R while an image that emerges to the exterior of this area is blurred.

Preferably, in claim (6) of the present invention, the coordinates Q(x,y) in claim (3) of the present invention are coordinates M(x,y) of a reference point representing a specific image B all or a part of which is contained in an area in close proximity to the detected coordinates P(x,y) of the fixation point described in claim (4) of the present invention or the coordinates C(x,y) of the designated point described in claim (5) of the present invention.

In accordance with claim (6) of the present invention, consider a case where the user is currently pursuing the fighter plane B in a manner similar to that described above. Obviously, in a situation (scene) of this kind, the object of interest of the user in terms of playing the game is the enemy plane B. However, though the user in pursuit of the enemy plane generally follows primarily the target B with his eyes, the user frequently looks also at other items (other fighter planes, an aiming device, instruments, etc.) at the same time. For this reason, there are instance where it is more desirable in terms of a game machine to lock the area R onto the immediate enemy plane B and always display only the central enemy plane B and the image surrounding it clearly.

However, in cases based upon line-of-sight detection in particular, on the basis of which line of sight (fixation point) prevailing at a certain time the area R should be locked is not known in actuality. In addition, even during pursuit the user is not necessarily staring at the center of the enemy plane B and may be looking at its surroundings.

Accordingly, in claim (6) of the present invention, the coordinates Q(x,y) for generating the area R are made the coordinates M(x,y) of the reference point representing a specific image (fighter plane B) all or a part of which is contained in the area in the proximity of the detected coordinates P(x,y) of the fixation point or the coordinates C(x,y) of the designated point.

As for which line-of-sight (fixation-point) coordinates P(x,y) or designated-point coordinates C(x,y) at a particular time serve as the basis for locking the area R, there are various considerations depending upon the operation of the game. For example, the game machine (game program) performs monitoring constantly to determine whether all or a part of a specific image (the enemy plane B in this example) that is important in terms of running the game is contained in the predetermined area in the proximity of the fixation point P or designated point C. If it is detected that all or a part of the specific image is contained in the predetermined area (i.e., if a hit determination usually employed in a game program is obtained), then the game machine locks the coordinates Q(x,y), which are for generating the area R, onto the coordinates M(x,y) of the reference point of the enemy plane B. Even if the fixation point P or designated point (aiming device) C should subsequently depart from the enemy plane B, the area R will already be locked on the enemy plane B and, as a result, the area R of clear vision will move together with the enemy plane B in real time. It should be noted that the lock is released by the occurrence of a specific event (the shooting down of the enemy plane B), which is stipulated by the game program in advance, or by an unlocking operation performed by the user.

Alternatively, an arrangement may be adopted in which the reference coordinates Q(x,y) of the area R are automatically locked onto the reference coordinates M(x,y) of specific heroes or objects, which are decided by the game program in advance, one after another in accordance with the flow of the game story without relation to the coordinates of the user's fixation point or of the designated point (aiming device) C. If such an arrangement is adopted, the user's attention will be drawn naturally to heroes and objects, for example, that are displayed clearly one after another, so that the game can develop (be guided) more dynamically and strikingly. Control for the latter is readily implemented by having the function generator 40 in claim (1) of the present invention generate the predetermined function H(x,y) at desired positions (e.g., positions provided by the game program one after another) in XY address space.

Preferably, in claim (7) of the present invention, the output image data g in claim (2) of the present invention is accompanied by depth data z representing depth along the Z axis in three-dimensional space of the image data g, and the image data processor 30 applies image processing, which conforms to the value of the function, to the corresponding output image data g on the condition that the depth data z falls within predetermined limits along the Z axis.

In accordance with claim (7) of the present invention, even if certain output image (pixel) data g is two-dimensional image data that has already undergone a perspective transformation, the image is output clearly, for example, in a case where the coordinate z along the Z axis in the 3D space from which the data g derives falls within the predetermined limits $(z_1 - z_2)$ along the Z axis, and is output in blurred fashion in a case where the coordinate z does not fall within these limits.

As a result, even if output image data (two-dimensional image data) g of another enemy plane A (not shown) toward the front of the diagram falls inside the two-dimensional area R, the output image data g will be such that its coordinate z will be $z < z_1$ within the 3D space from which the data g derives and, hence, the image will not be output clearly. Further, even if output image data (two-dimensional image data) of another enemy plane C toward the rear of the diagram falls inside the two-dimensional area R, the output image data g will be such that its coordinate z will be $z > z_2$ within the 3D space for which the data g derives and, hence, the image will not be output clearly. This agrees closely with the area of clear vision (focused/defocused state) of the human eye in actual 3D space and greatly improves upon the realism of a pseudo-three-dimensional image (3D CG).

Brief Description of the Drawings

Fig. 1 is a diagram for describing the principles of the present invention;
Fig. 2 is a diagram illustrating the construction of a game machine according to a first embodiment;
Fig. 3 is a diagram (1) for describing an image data editing unit in the first embodiment;
Fig. 4 is a diagram (2) for describing an image data editing unit in the first embodiment;
Fig. 5 is a diagram illustrating the construction of a game machine according to a second embodiment;
Fig. 6 is a diagram for describing the operation of a fixation-point detector in the second embodiment;
Fig. 7 is a flowchart of processing for fixation-point detection in the second embodiment;
Fig. 8 is a diagram (1) for describing an image data editing unit in the second embodiment;
Fig. 9 is a diagram (2) for describing the image data editing unit in the second embodiment;
Fig. 10 is a diagram illustrating the construction of a game machine according to a third embodiment;
Fig. 11 is a diagram for describing the operation of a rendering processor in the third embodiment;
Fig. 12 is a diagram illustrating the construction of an image data editing unit in the third embodiment;
Fig. 13 is an image diagram showing the operation of the image data editing unit in the third embodiment; and
Fig. 14 is a diagram for describing the prior art.

Best Mode for Carrying Out the Invention

A plurality of embodiments ideal for practicing the present invention will be described in detail in accordance with the accompanying drawings. It should be noted that identical reference characters indicate identical or corresponding components throughout the drawings.

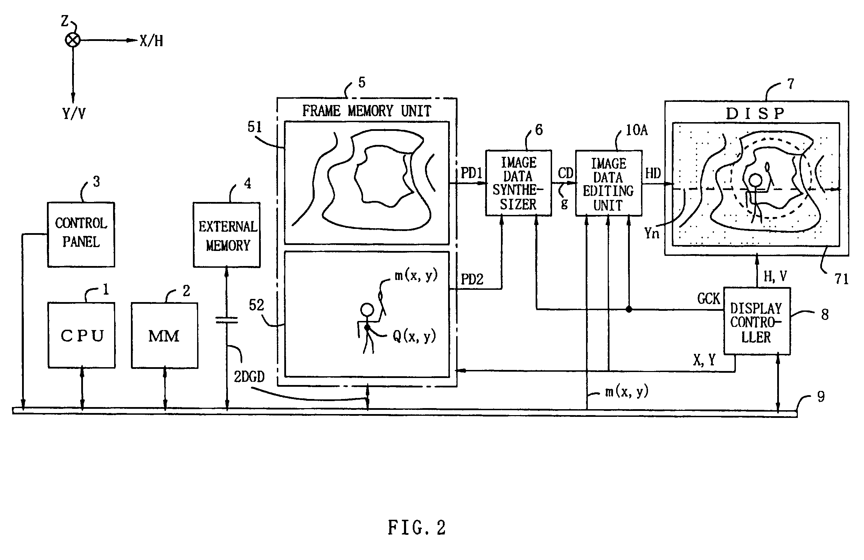

Fig. 2 is a diagram showing the construction of a game machine according to a first embodiment. This diagram illustrates a case where generation of the dark pattern and processing for superimposing the same described in Fig. 14 are performed automatically within the apparatus.

Shown in Fig. 2 are an image data editing unit (which corresponds to the image data processor 30 and function generator 40 in Fig. 1) 10A in the first embodiment. Other components may be similar to those described in connection with Fig. 14. However, the frame memory 53 for storing the image data PD3 for image editing purposes such as the darkness pattern has been deleted from the frame memory unit 5.

As the game proceeds, the CPU 1 writes cave image data (2D CG), which has been read out of the external memory 4, to the frame memory 51. Further, the CPU 1 develops image data of the torch-holding hero, which has been read out of the external memory 4, about the periphery of the reference coordinates Q(x,y) of the hero in frame memory 52, the hero being controlled by commands from the control panel 3. The hero in this case is moved in a desired direction by the cursor operated by the user, and the CPU 1 responds by moving the image data of the hero (inclusive of the torch) in frame memory 52 in the corresponding direction.

Under these conditions, the image data synthesizer 6 superimposes the image data PD2 of the hero on the cave image data PD1 pixel by pixel and generates the combined data CD. The image data editing unit 10A generates a predetermined function $H_1(x,y)$ based upon coordinates m(x,y) of the torch supplied from the CPU 1 and display coordinates (X,Y) from the display controller 8, applies a corresponding luminance correction (editing) to the combined data CD inside/outside the region R defined by the function $H_1$, and generates corrected image data HD. This image data HD is input to the display unit 7, as a result of which a scene similar to that shown in Fig. 14 is displayed on the display screen 71.

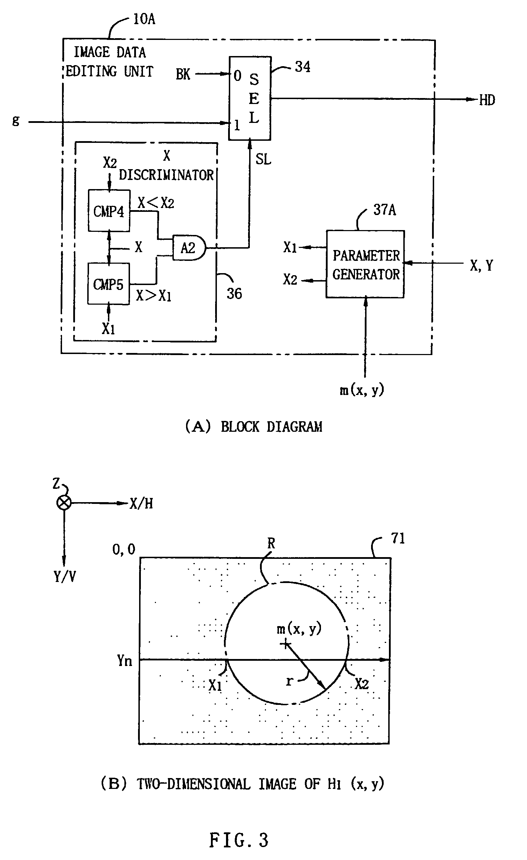

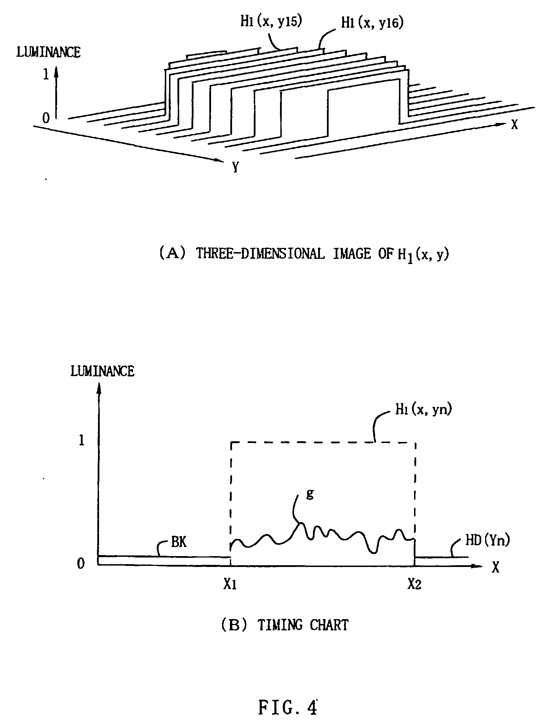

Figs. 3 and 4 are diagrams (1), (2) for describing the image data editing unit according to the first embodiment, and Fig. 3(A) is a block diagram of the image data editing unit.

In the Figures, reference characters 10A represent the image data editing unit according to the first embodiment; 34 a data selector (SEL) which, in accordance with a selection signal SL = 0/1 of a control input, selects black-pixel data BK representing darkness in a data input or combined-pixel data g from the image data synthesizer 6, which is the preceding stage; 37A a parameter generator for generating, in real time, threshold-value coordinates $X_1$, $X_2$ necessary for area discrimination along the X axis at each Y axis based upon coordinates m(x,y) of the torch supplied from the CPU1, and X,Y scanning addresses from the display controller 8; 36 an X discriminator for performing area discrimination along the X axis by comparing the scanning address from the display controller 8 and the threshold-value coordinates $X_1$, $X_2$; CMP a comparator; and A an AND gate. It should be noted that the circuit comprising the parameter generator 37A and X discriminator 36 corresponds to the function generator 40 of Fig. 1.

By virtue of this arrangement, the area R corresponding to the function $H_1(x,y)$ is generated in real time about desired coordinates $m(x,y)$ in sync with the scanning X, Y of the display screen 71, and the combined-pixel data g is subjected to a luminance correction (editing) based upon the inside/outside determination concerning area R.

Fig. 3B illustrates a two-dimensional image of the function $H_1(x,y)$.

If the upper-left corner of the display screen 71 is taken as the origin (0,0) of the scanning coordinates (X,Y), the scanning line will advance along the X axis at high speed pixel by pixel. When display of the first line (Y=0) is finished, display of the second line (Y=1) begins. This is followed by repeating the same operation. When torch coordinates $m(x,y)$ enter from the CPU 1, the parameter generator 37A, in the manner described below, and as the scanning line Y advances, obtains threshold-value coordinates $(X_1, X_2)$, along the X axis, at which each scanning line Y (e.g., scanning line $Y_n$) intersects the circle R of radius r the center whereof is represented by the coordinates $m(x,y)$.

If $\Delta x = X_2 - x$, $\Delta y = Y_n - y$ holds, then, from the relation $\Delta x^2 + \Delta y^2 = r^2$, we have

$$|\Delta x| = \sqrt{[r^2 - (Y_n - y)^2]}$$

where the expression within the brackets represents inclusion in the square root. Since the torch coordinates $m(x,y)$, the radius r and the coordinates $Y_n$ of the Y scanning line are already known, the X coordinates $X_1$, $X_2$ of the points of intersection are found by evaluating the following equations;

$$X_1 = x - |\Delta x| = x - \sqrt{[r^2 - (Y_n - y)^2]}$$

$$X_2 = x + |\Delta x| = x + \sqrt{[r^2 - (Y_n - y)^2]}$$

It should be noted that when the expression within the square root is negative, the value thereof is taken as being zero (i.e., $X_1$, $X_2 = x$). Thus, as the Y scanning line advances, the parameter generator 37A successively generates the threshold-value coordinates $(X_1, X_2)$ along the X axis for every scanning line Y.

The X discriminator 36 compares the X address of the scanning line and the generated threshold-value coordinates $(X_1, X_2)$. The CMP 5 produces an output signal $X > X_1 = 1$ (HIGH level) when $X > X_1$ holds, and the CMP 4 produces an output signal $X < X_2 = 1$ when $X < X_2$ holds. Accordingly, the output signal SL of the AND gate A2 becomes SL = 1 only when the X address on the scanning line Yn satisfies the relation $X_1 < X < X_2$; otherwise, SL = 0 holds. The selector 34 selects the pixel data g of the input when SL = 1 holds and the black data BK when SL = 0 holds. Further, in regard to each scanning line $Y_i$, the relation $X_1 < X < X_2$ is satisfied only inside the circle R, as shown in Fig. 3(B). Accordingly, the end result is that the area inside the circle R is treated as being transparent and the pixel data g of the input passes through as is. The exterior of the circle R is darkness, however, and the pixel data g of the input is replaced by the black data BK.

Fig. 4(A) illustrates a three-dimensional image of the function $H_1(x,y)$. In this example, the value (along the vertical axis) of the function $H_1(x,y)$ corresponds to a luminance normalization correction coefficient 0/1.

It should be noted that the planar shape of the function $H_1(x,y)$ is not limited to the above-mentioned circle R. Besides the circle, a triangle, rectangle (square), trapezoid or other polygon or an ellipse can be generated in real time by calculation performed by a hardware arithmetic circuit or DSP, etc. Further, an arrangement may be adopted in which a plurality of functions are capable of being generated in advance and any function is used selectively in accordance with a command from the CPU 1.

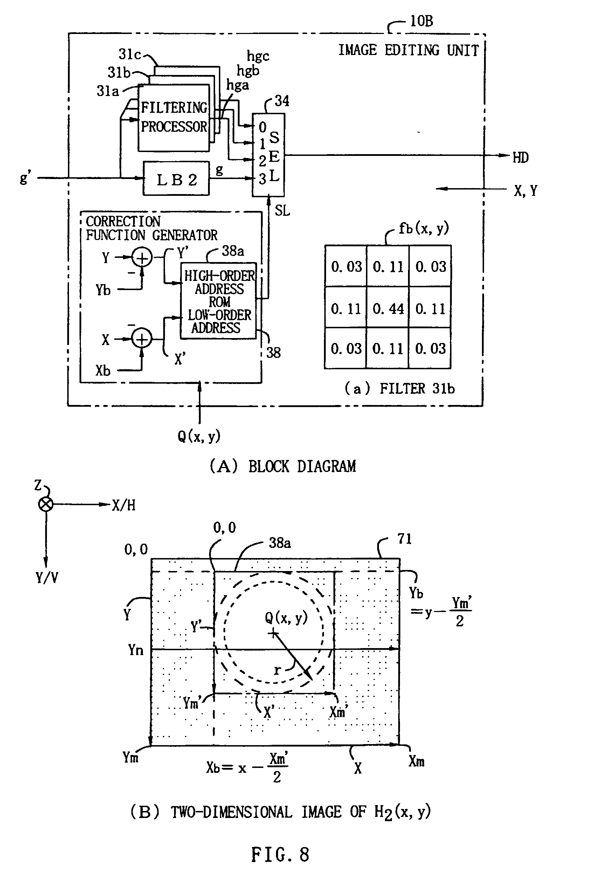

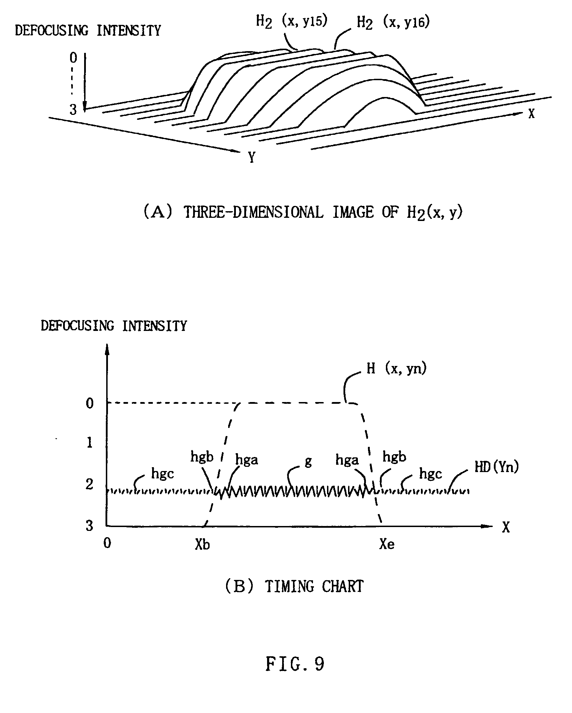

Here a simple example in which the value of the function $H_1(x,y)$ becomes 0/1 is illustrated. However, by using a ROM 38a in Fig. 8(A) and Fig. 9(A), described later, a function $H_2(x,y)$ having any complicated shape and function value can readily be generated in real time. Accordingly, luminance corrections of a variety of forms that more closely approximate nature become possible.

Further, instead of employing a method in which the pixel data g of the input is replaced by the black data BK, as shown in Fig. 3(A), a method in which the pixel data g of the input is multiplied by luminance correction data h is conceivable. In accordance with this method, in the darkness portion the pixel data $g(x,y)$ of the input is multiplied by luminance correction data $h_1(x,y) = 0$ so that the image data $g(x,y)$ of the output becomes zero (black). Further, in regard to the portion illuminated by the torch, the pixel data $g(x,y)$ of the input is multiplied by the luminance correction data $h_1(x,y) = \alpha$ (1 in this example) so that the image data $g(x,y)$ of the output becomes $\alpha \cdot g(x,y)$. In this case, luminance is increased if $\alpha > 1$ holds and decreased if $\alpha < 1$ holds.

Fig. 4(B) illustrates a timing chart of the luminance correction in the image data editing unit 10A. If corrected image data $HD(Y_n)$ of a certain scanning line $Y_n$ is observed, it will be seen that the black pixel data BK is output in the interval $X \leqq X_1$ of darkness, that the pixel data g of the input is then output as is in the interval $X_1 < X < X_2$ of transparency, and that the black pixel data BK is then output again in the interval $X \geqq X_2$ of

darkness.

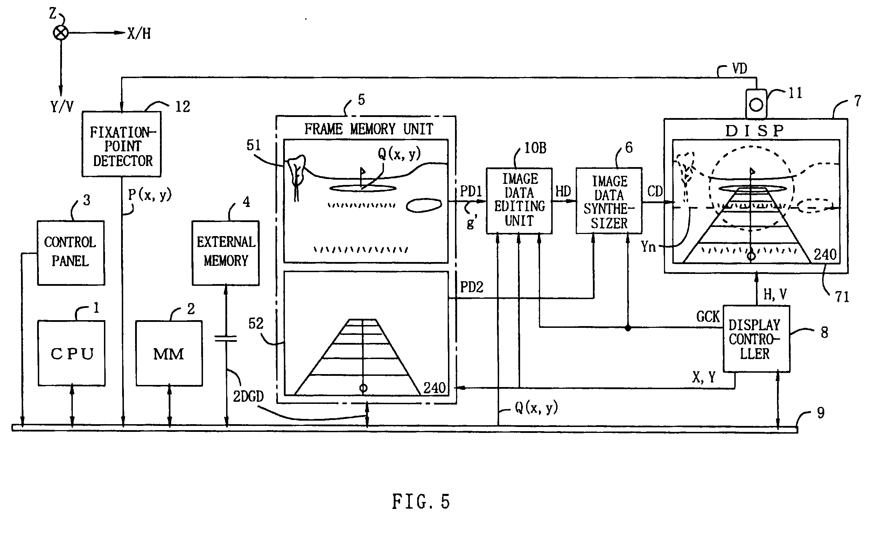

Fig. 5 is a diagram illustrating the construction of the game machine according to a second embodiment. This illustrates a case where images inside and outside the generated area R are displayed clearly (in a focused state) whereas images outside this area are displayed in a blurred (defocused) state.

Shown in Fig. 5 are an image data editing unit 10B according to the second embodiment, a television (CCD) camera 11 capable of imaging the surroundings of the user's eye, and a fixation-point detector 12 for detecting the position of the fixation point of the user on the screen 71. Other components are the same as those described in connection with Fig. 2.

Here one scene of golf play is illustrated. Background image data representing a golf course is stored in the frame memory 51. The background includes images such as that of the green serving as the target, a hole at the center of the green, a flag erected on the green, a hill, shrubs and bunker surrounding the green, and the surrounding grass. The image of a golf ball that is to be hit (controlled) by the user is stored in the frame memory 52. In this scene the object of interest of the user is a point on the green in the distance, and the distance to the green and the inclination of the slope along way are guessed. Further, according to this scene, the image of a scale for estimating the distance to the green and the inclination have been called by running the game, and the image of the scale is developed so as to be superimposed upon the frame memory 52 temporarily.

Under these conditions, the images of both eyes of the user in front of the screen are read by the CCD camera 11 and input to the fixation-point detector 12 from time to time. By analyzing the images of both eyes, the fixation-point detector 12 generates the coordinates P(x,y) of the user's fixation point on the display screen 71 and inputs the coordinates to the CPU 1. On the basis of the game operating (scene) information, the CPU 1 detects that the vicinity of the fixation point P(x,y) currently being watched by the user includes the green, which is an important element in terms of advancing the game, and judges that the fixation point of the user is the hole on the green through a method determined by the game in advance. In response, the CPU 1 calculates the coordinates Q(x,y) of the hole and inputs these coordinates to the image data editing unit 10B.

On the basis of the coordinates Q(x,y) of the hole from the CPU 1 and the display address (X,Y) from the display controller 8, the image data editing unit 10B generates the predetermined function $H_2(x,y)$ as a reference, whereby a correction (editing) is applied to the background data PD1 of the frame memory 51 and the corrected image data HD is output. The image data synthesizer 6 combines the image data PD2 of the frame memory 52 with the image data HD output from the image data editing unit 10B and outputs the combined data CD to the display unit 7. As a result, the image of the vicinity of the hole (the image within the area R) being stared at by the user is displayed clearly on the display screen 71, whereas the image outside (externally of the area R) (the surrounding bunkers, the golf ball in front, etc.) is displayed in a blurred state.

It should be noted that when the user fixes his vision on the lower side of the display screen 71, the CPU 1 judges, based upon the detected coordinates P(x,y) of this fixation point, that the user is gazing at the golf ball and outputs the golf-ball coordinates Q(x,y). As a result, the image of the vicinity of the golf ball (the image within the area R) being stared at by the user is displayed clearly on the display screen 71, whereas the image outside (in the vicinity of the hole, etc.) is displayed in a blurred state.

The foregoing expresses more faithfully circumstances similar to those the user experiences when actually playing golf [i.e., circumstances in which the image in the vicinity of the fixation point appears clear to the human eye while other images appear (are sensed to be) blurred]. This improves greatly the reality of the game.

Various methods of detecting the fixation-point direction of the human eye that are already known involve wearing special-purpose goggles, and capturing, by one or two or more light-receiving elements, the fact that one or two or more light beams of a specific wavelength (infrared, etc.) emitted toward the pupil within the goggles are reflected in a corresponding direction in conformity with the line-of-sight direction of the pupil, whereby the line-of-sight of the pupil can be detected accurately. It goes without saying that these various well-known methods (apparatus) can be utilized in the second embodiment as well.

In the second embodiment, however, taking into consideration that high precision is not required of the line-of-sight detecting means because the coordinates Q(x,y) of a specific object involved in playing the game can be determined from the coordinates P(x,y) of the general fixation point, and the fact that the wearing of special-purpose goggles or eyeglasses is generally undesirable, there will be described a simple fixation-point detecting method that utilizes a small stationary television (CCD) camera now coming into widespread use.

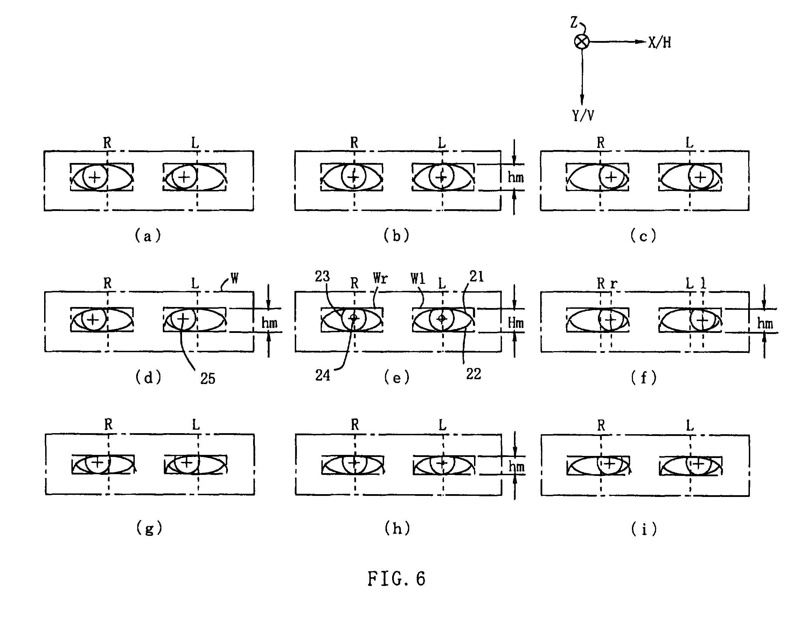

Fig. 6 is a diagram for describing the operation of a fixation-point detector according to the second embodiment.

Fig. 6(e) illustrates the images of both eyes when the user gazes at the center of the display screen 71. By displaying a message or image that the user will watch at the center of the display screen 71 as when the game is started, it is possible to readily direct the eyes of the user toward the center of the screen.

When observed in terms of the image captured by the CCD camera 11, the left eye L of the user appears on the right side and the right eye R of the user appears on the left side in Fig. 6. The description that follows conforms to this relationship. First, upper and lower eyelids 21, 22, irises 23 and pupils 24 are identified by applying well-known fundamental image analysis to the image data of both eyes, and characteristic information relating to the line-of-sight direction of the user is extracted from the identified items. It should be noted that though the pupil is within the iris (blue or brown, etc.), the pupil can be identified because of its darker color (black, etc.). If difficulty happens to be encountered in identifying the pupil, a circular pattern of the same size as the iris may be generated in a form superimposed on the iris portion and the center of this circle may be found and construed as being the pupil.

In general, the human iris clearly demarcates the white of the eye into left and right sides, and the iris often moves from side to side. This makes it possible to detect the left-right direction with comparative ease. On the other hand, the human eye does not move up and down very much. There is a tendency for the upper eyelid 21 to open upward when the person looks up and for the upper eyelid 21 to close downward when the person looks down. Thus, the degree of opening between the upper and lower eyelids can be used as one criterion.

Accordingly, rectangular left and right windows $W_l$, $W_r$ which enclose the upper and lower eyelids 21, 22 are generated and height $H_m$ of the windows when the user is looking at the center of the screen 71 is taken as a reference indicative of the degree of eyelid opening. In this case, if both eyes open to the same degree, the average value may be taken as the height $H_m$. If both eyes do not open to the same degree, the fixation point may be detected based upon analysis solely of the left or right eye. Furthermore, the coordinates of the irises 24 (or the centers of the pupils 23) within the left and right windows Wl, Wr are found and adopted as reference coordinates L, R in the left-right direction. Though eye size, the distance between the left and right eyes and the degree of eyelid opening varies from person to person, the above-described processing eliminates such individual differences and provides a passable reference.

Fig. 6(f) shows an image obtained when the user looks to the right of the center of the screen. In this case the opening degree $H_m$ of the eyelids does not change much and the positions l, r of the pupils 24 have moved to the right. Accordingly, based upon the determination that $h_m \fallingdotseq H_m$ holds and that l > L and/or r > R holds, it can be discriminated that the user is staring to the right of the center of the screen 71.

Alternatively, the coordinates P(x,y) of the general fixation point on the screen 71 are obtained as follows: Specifically, the X coordinate of the fixation point on the screen is $x = x_m + \beta$ (1-L) or $x = x_m + \beta$ (r-R) and the Y coordinate is $y = y_m$. Here $(x_m, y_m)$ represents the coordinates of the center of the screen 71 and $\beta$ is a coefficient for enlarging micro-displacement (1-L) or (r-R) of the pupils 24 to the position of the fixation point on the screen. When the user looks to the right, the pupil 24 of the left eye (R in terms of the image) tends to move to the right by a large amount. When the X coordinate $x = x_m + \beta$ (r-R) is employed, therefore, it can be said that sensitivity is good.

Fig. 6(d) shows an image obtained when the user looks to the left of the center of the screen. This is considered to be the converse of Fig. 6(f). When the user looks to the left, the pupil 24 of the right eye (L in terms of the image) tends to move to the left by a large amount. When the X coordinate $x = x_m + \beta$ (1-L) is employed, therefore, it can be said that sensitivity is good.

Fig. 6(b) shows an image obtained when the user looks above the center of the screen. In this case the opening degree of the eyelids satisfies the relation $h_m > H_m$ and the horizontal coordinates of the pupils 24 satisfy the relations $L \fallingdotseq l$ and/or $R \fallingdotseq r$. It can be discriminated, therefore, that the user is staring above the center of the screen. Alternatively, the coordinates P(x,y) of the fixation point are obtained in accordance with X coordinate $x = x_m$ and Y coordinate $y = y_m + \gamma$ ($h_m$-$H_m$). Here $\gamma$ is a coefficient for enlarging micro-displacement ($h_m$-$H_m$) of the opening degree of eyelids 21, 22 to the position of the fixation point on the screen. Fig. 6(h) shows an image obtained when the user looks below the center of the screen. This is considered to be the converse of Fig. 6(b).

By virtue of the above-described combinations, it is possible to discriminate each general fixation-point area when the user looks to the upper left (a), upper right (c), lower left (g) or lower right (i) of the screen 71. Alternatively, the coordinates P(x,y) of each fixation point are found. Here the X coordinate of the fixation point is $x = x_m \pm \Delta x$ and the Y coordinate is $y = y_m \pm \Delta y$.

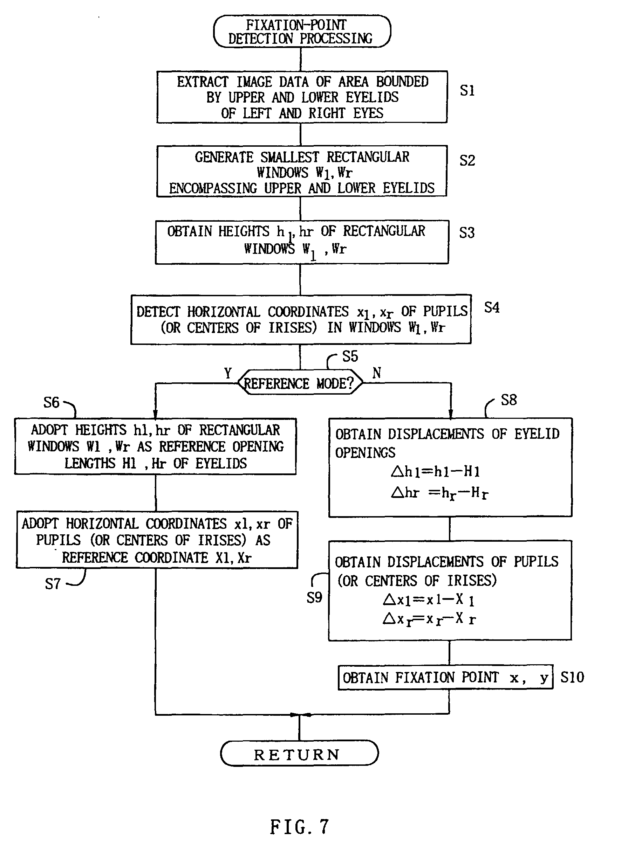

Fig. 7 is a flowchart of fixation-point detection processing according to the second embodiment.

Inputs are made to this processing as appropriate during running of the game. Image data of the areas bounded by the upper and lower eyelids 21, 22 of the left and right eyes are extracted at step S1. Identification of the upper and lower eyelids 21, 22, irises 23 and pupils 24 can be carried out by subjecting the image data to well-known edge detection processing and pattern recognition processing, etc. The smallest rectangular windows $W_l$, $W_r$ that encompass the upper and lower eyelids 21, 22 are generated at step S2. The heights $h_l$, $h_r$ of the rectangular windows $W_l$, $W_r$ are obtained at step S3. The horizontal coordinates $x_l$, $x_r$ of the pupils 24 (or the centers of the irises 23) in the rectangular windows $W_l$, $W_r$ are detected at step S4. It should be noted that the irises 23 cannot be imaged in their entirety when the upper and lower eyelids 21, 22 are half open. In this case, by applying well-known image matching processing to the visible portions (semicircles, etc.) of the irises, circular patterns of identical size are pattern-matched with respect to the irises 23 and the centers of the circular patterns at such time can be regarded as the pupils 24.

Processing branches at step S5 depending upon whether the running mode of the game is a reference mode. For example, when the user is made to look at the center of the screen 71 as when the game is started, such mode is the reference mode. In this case control proceeds to step S6 where the heights $h_l$, $h_r$ of the rectangular windows $W_l$, $W_r$ are adopted as the opening lengths $H_m$ ($H_l$, $H_r$) of the eyelids. The horizontal coordinates $x_l$, $x_r$ of the pupils 24 (or centers of the irises 23) are adopted as reference horizontal coordinates $X_l$, $X_r$ at step S7.

If the determination made at step S5 is that the mode is not the reference mode, control proceeds to step S8, at which the displacements $\Delta h_l = h_l - H_l$, $\Delta h_r = h_r - H_r$ of the openings of the eyelids are obtained. The displacements $\Delta x_l = x_l - X_l$, $\Delta x_r = x_r - X_r$ of the pupils 24 (or centers of the irises 23) are obtained at step S9. The coordinates P(x,y) of the fixation point on screen 71 are obtained at step S10. It may be so arranged that any one of nine areas into which the screen 71 has been divided may be obtained.

Figs. 8 and 9 are diagrams (1), (2) for describing the image data editing unit according to the second embodiment. Fig. 8(A) is a block diagram of the image data editing unit.

Shown in Fig. 8 are the image data editing unit 10B according to the second embodiment, image data filtering processors 31a - 31c, an image data line buffer LB2, a correction function generator 38 for generating a correction area R and correction intensity in the display screen 71, an adder (+), and a ROM 38a in which correction-intensity data (the selection signal) SL has been written at a position corresponding to an address (X',Y') input in advance.

The filtering processors 31 each generate corrected image data $h_g$ by taking the weighed mean of, e.g., nine pixels inclusive of a central pixel of interest in regard to image data g' of the input.

A computation matrix (filter characteristic), which is one example of the filter 31b, is shown in the insert diagram (a). If the pixel of interest is the pixel of the second row and second column, the weighted mean of the eight neighboring pixels is taken and adopted as the pixel data $h_{gb}$ of the pixel of interest. An example of the weighting of the pixel of interest is 0.44, and the total of the weightings of the eight neighboring pixels is 0.56. The luminance and color of the pixel $h_{gb}$ of interest are influenced and rendered less distinct by the eight neighboring pixels depending upon the combination of the weightings.

The filtering processor 31c has a strong defocusing characteristic. That is, the weighting of the pixel of interest is less than 0.44 and the total of the weightings of the eight neighboring pixels is greater than 0.56. The filtering processor 31a, meanwhile, has a weak defocusing characteristic. That is, the weighting of the pixel of interest is greater than 0.44 and the total of the weightings of the eight neighboring pixels is less than 0.56.

As a result of taking the average value of nine pixels by the filtering processors 31, it is necessary to pre-read at least one line and pixel of image data g' from the frame memory 51 of the preceding stage to the filtering processors 31. The line buffer LB2 is provided to mitigate the phase difference between the input and output.

Fig. 8(B) illustrates a two-dimensional image of the function $H_2(x,y)$ generated by the correction function generator 38. If the address of the scanning line is scanned successively in the direction of the Y rows and X columns, then the address of the ROM 38a will be scanned successively in the direction of Y' rows and X' columns in sync with the scanning of the address of the scanning line. On the assumption that the address size of ROM 38a is $(X_m',Y_m')$ and the coordinates of the target (fixation point) on screen 71 are Q(x,y), then the high-order access starting address of the ROM 38a is $Y_b = y - (Y_m'/2)$, the low-order access address thereof is $X_b = x - (X_m'/2)$, the high-order scanning address of the ROM 38a is $Y' = Y - Y_b$ and the low-order scanning address thereof is $X' = X - X_b$.

An example of operation will be described using specific numerical values. On the assumption that the address size $(X_m,Y_m)$ of a scanning line is equal to (200,150), the address size $(X_m',Y_m')$ of ROM 38a is equal to (50,50) and the coordinates Q(x,y) are (100,30), the high-order access starting address of ROM 38a will be $Y_b = 30 - 25 = 5$ and the low-order access address thereof will be $X_b = 100 - 25 = 75$. Further, the high-order scanning address of ROM 38a is the relation $Y' = Y - 5$ and the low-order scanning address thereof is the relation $X' = X - 75$.

If under these conditions the scanning address (X,Y) of a certain frame starts from (0,0), then, with regard to the Y' axis of the ROM 38a, the high-order accessing of ROM 38a starts from Y' = 0 when the scanning address Y becomes Y = 5, and each item of correction data SL of the final line is read out from Y' = 49 when the scanning address Y becomes Y = 54. Further, with regard to the X' axis, the low-order accessing of ROM 38a starts from X' = 0 when the scanning address X becomes X = 75, and each item of correction data SL of the final column is read out from X' = 49 when the scanning address X becomes X = 124.

It should be noted that the ROM 38a delivers the output data SL = 0 in case of an address input other than one in the area bounded by $0 \leqq X' \leqq 49$ and $0 \leqq Y' \leqq 49$. In general, it is recommended that $X_m \neq Y_m$ old for the address size of ROM 38a.

Thus, merely by freely designating the coordinates Q(x,y) externally, the read-out area $(X_m',Y_m')$ of ROM 38a can be readily applied to any position (even if a portion emerges from the area) on the display screen 71.

Fig. 9(A) illustrates a three-dimensional image of the function $H_2(x,y)$. Here the vertical axis indicates defocusing intensity. The read-out data SL = 0 of ROM 38a is correlated with a defocusing intensity 3 of a third level (maximum) by the selector 34. Image data $h_{gc}$ after the filtering correction is selected within this interval. The read-out data SL when the ROM 38a is not accessed appropriately (i.e., when the input is outside the access area of ROM 38a) is SL = 0. In this case also the image data $h_{gc}$ after the filtering correction is selected. Further, the read-out data SL = 1 of the ROM 38a is correlated with a defocusing intensity 2 of a second level by the selector 34. Image data $h_{gb}$ after the filtering correction is selected within this interval. Further, the read-out data SL = 2 of the ROM 38a is correlated with a defocusing intensity 1 of a first level (weakest) by the selector 34. Image data $h_{ga}$ after the filtering correction is selected within this interval. Further, the read-out data SL = 3 of the ROM 38a is correlated with a defocusing intensity 0 (no defocusing) by the selector 34. Pixel-of-interest data g of the input is selected as is within this interval.

Accordingly, an image which has distinct contrast at the periphery of the coordinates $Q(x,y)$ and which is defocused gradually as distance from these coordinates increases can be generated in real time with ease. Further, since the function $H_2(x,y)$ of any area shape and numerical value can be stored in ROM 38a beforehand, defocusing corrections of various forms that more closely approximate nature can be carried out.

It should be noted that a RAM 38a may be used instead of the ROM 38a. In such case function information concerning various area shapes and numerical values would be stored in the RAM 38a and used when convenient in conformity with the progress of the game. In this case the area would not be limited to one. For example, by providing a somewhat large RAM 38a, two or more areas can be generated simultaneously. This point holds similarly for the ROM 38a.

Further, though a case in which the generated function $H_2(x,y)$ and the filtering processors 31 for performing the defocusing correction of the image data are operatively associated has been described, the invention is not limited to this arrangement. For example, the image within the area R can be enlarged or reduced as in the manner of a lens effect, the brightness or color of the image can be changed and the image can be rotated or offset in position. Thus, linkage with various other image processing operations is possible.

Fig. 9(B) illustrates a timing chart of the defocusing correction performed in the image data editing unit 10B. If corrected image data $HD(Y_n)$ of a certain scanning line $Y_n$ is observed, it will be seen that pixel data $h_{gc}$ that has been subjected to filtering processing is output in the external interval $X \leqq X_b$, that the pixel data g of the input is output while the degree of defocusing gradually decreases, and then is output as is, in the interval $X_b < X < X_e$, and that the filtered pixel data $h_{gc}$ is then output again in the external interval $X \geqq X_e$.

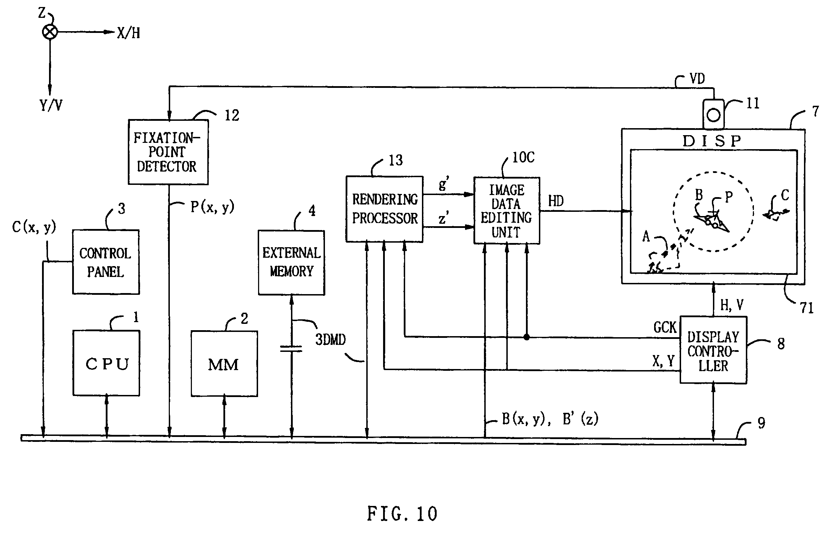

Fig. 10 is a diagram illustrating the construction of the game machine according to a third embodiment. This illustrates a case where 3D CG image data is processed.

Shown in Fig. 10 are a well-known rendering processor 13 and a image data editing unit 10C according to the third embodiment. Other components are the same as those described in connection with Fig. 5.

Here one scene of battle game based upon fighter planes is illustrated. As the game progresses, the CPU 1 reads 3D CG model data 3DMD out of the external memory 4 successively and inputs the data to the rendering processor 13.

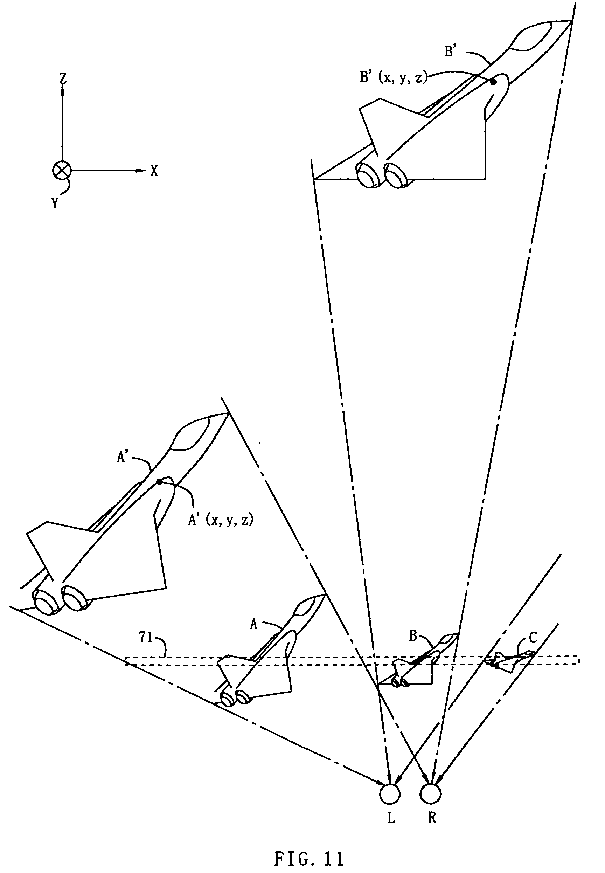

Fig. 11 is a diagram for describing the operation of the rendering processor in the third embodiment. Using reference coordinates A'(x,y,z), B'(x,y,z) of fighter planes A', B' in 3D space as a reference, the rendering processor 13 develops the 3D images of the fighter planes A', B' in virtual space based upon shape model data that is common with regard to the fighter planes. The fighter planes A', B' in 3D space both have the same size. The rendering processor 13 further generates 2D images, which are displayed on the screen 71, by subjecting the 3D images of the fighter planes A', B' to a perspective transformation in relation to the eyes L, R of the user. The fighter planes A, B of these 2D images comprise only pixel data of the portions that can be seen from the user side and constitute the images of fighter planes A, B that give an impression of distance (i.e., difference size) in conformity with distance from the user. The image of a certain fighter plane C in the distance is painted in small size on the screen 71.

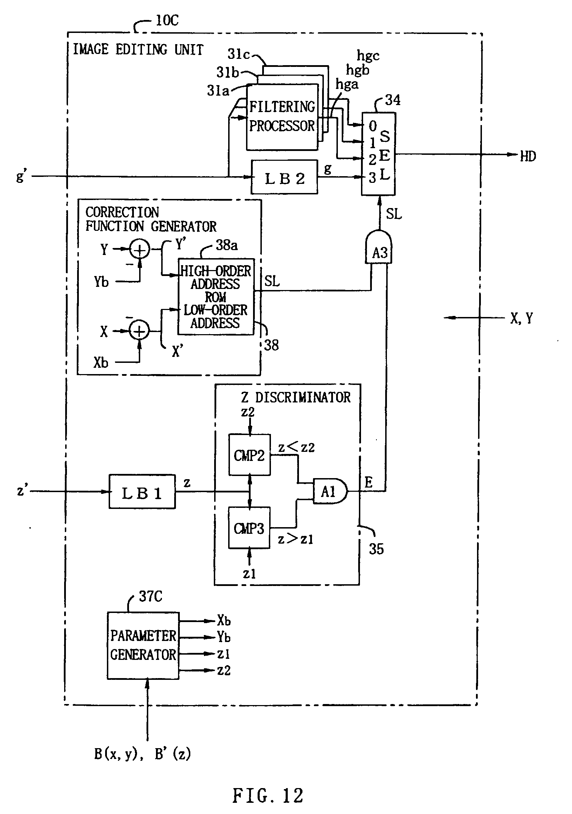

Fig. 12 is a diagram showing the construction of the image data editing unit according to the third embodiment. Shown in Fig. 12 are the image data editing unit 10C according to the third embodiment, a Z discriminator 35 for performing area discrimination along the Z axis in 3D space, and a parameter generator 37C. Other components are similar to those shown in Fig. 8(A).

Pixel data g' that has undergone a perspective transformation to 2D and depth data z' representing Z-axis coordinates of the pixel data g' in 3D space are input to the image data editing unit 10 from the rendering processor 13 of the preceding stage. In a manner similar to that of the second embodiment described above, the pixel data g' is subjected to plural types of filtering processing and to non-filtering processing (delay processing based upon the line buffer LB2) in parallel. On the other hand, the input depth data z' is subjected to a delay by a line buffer LB1 in order to match the processing phase to that of the image data g, and the resulting data is adopted as depth data z. The description will continue below using the phase of both items of data g, z as a reference.

With reference again to Fig. 10, and on the assumption that the user is looking at the fighter plane B at the center of the screen, the fixation-point detector 12 generates the coordinates P(x,y) of the user's fixation point on the screen based upon the imaged data of both eyes from the CCD camera 11 and inputs the coordinates to the CPU 1. The CPU 1 sends the coordinates P(x,y) to the rendering processor 13 and requests a search for the object (the principal element constituting the game) being gazed at by the user.

The rendering processor 13 investigates the 2D image in the area in the vicinity of the coordinates P(x,y), determines whether all or part of the image of the object is contained in this area and, in this example, detects that part of the fighter plane B is contained in this area. The rendering processor 13 then extracts the reference coordinates B(x,y) of the fighter plane B on the screen, executes processing that is the reverse of the above-described perspective transformation based upon these coordinates and finally extracts the reference coordinates B'(x,y,z) of the fighter plane B' in 3D space. The rendering processor 13 then sends back the reference coordinates B(x,y) of the fighter plane B on the 2D screen and the Z-axis reference coordinate B'(z) of the fighter plane B' to the CPU 1. Upon receiving these coordinates, the CPU 1 inputs the coordinates B(x,y), B'(z) to the image data editing unit 10C.

In Fig. 12, the parameter generator 37 generates the necessary parameters based upon the 2D coordinates B(x,y) of the input. That is, the parameter generator 37 obtains the high-order access starting address $Y_b = y - (Y_m'/2)$ and the low-order access starting address $X_b = x - (X_m'/2)$ of the ROM 38a. Further, based upon the 3D coordinate B'(z) of the input, the parameter generator 37 obtains a lower-limit threshold value $z_1 = z - \Delta z$ and an upper-limit threshold value $z_2 = z + \Delta x$ along the Z axis for discriminating a Z-axis area in 3D space. The memory size $(X_m', Y_m')$ of ROM 38a and a prescribed depth parameter $\Delta z$ with regard to the Z axis are already known in the parameter generator 37. It should be noted that an arrangement may be adopted in which the depth parameter $\Delta z$ is provided by the CPU 1.

Comparators CMP 2, 3 in the Z discriminator 35 compare the depth data z corresponding to each item of pixel data g with the threshold values $z_1, z_2$. When the relation $z_1 < z < z_2$ holds, the condition of AND gate A1 is satisfied, at which time this AND gate outputs an enable signal E = 1 for enabling an AND gate circuit A3 (which comprises a plurality of AND gates), described later.

Meanwhile, the selection signal SL output from the correction function generator 38 is gated by the enable signal E in the AND gate circuit A3. A valid selection signal SL is applied to the data selector 34 when enable signal E = 1 holds. Accordingly, the selector 34 ordinarily selects the most defocused pixel data $h_{gc}$, which is the output of the filtering processor 31c. However, in regard to pixel data for which the X, Y scanning address lies within the read-out area of ROM 38a and the Z discriminator 35 discriminates to be within the prescribed Z area, the selector, in accordance with the selection signal SL output by the ROM 38a, selects and outputs any one of the items of pixel data from the pixel data $h_{gb}$, which is the second most defocused, and the original pixel data g.

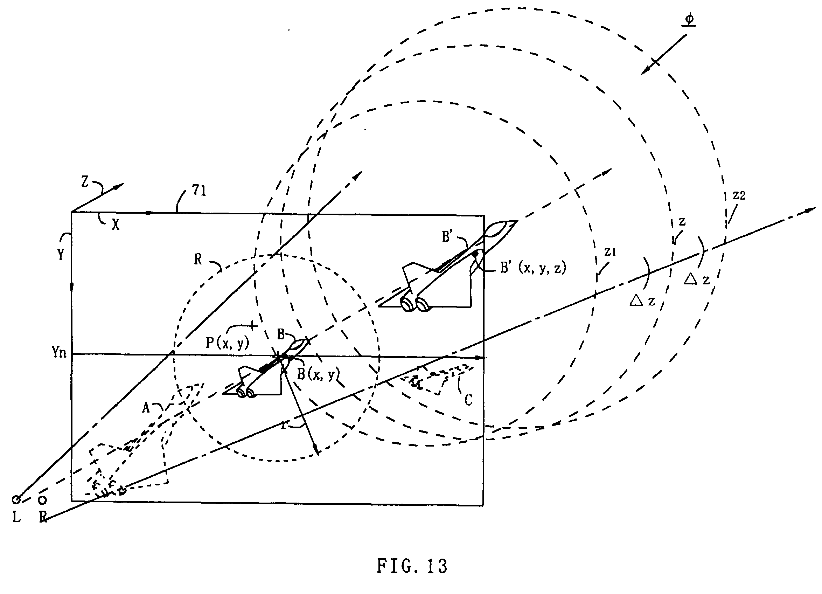

Fig. 13 is an image diagram showing the operation of the image data editing unit 10C in the third embodiment. The reference coordinates B(x,y) of fighter plane B on the screen and the Z coordinate B'(z) of the fighter plane B' in 3D space were extracted in the preceding stage, described above, based upon the coordinates P(x,y) of the user's fixation point. The correction function generator 38 in the image data editing unit 10C generates the correction function $H_2(x,y)$ having a shape indicated by the planar area R based upon the 2D coordinates B(x,y) of the input. The planar area R is correlated with 3D space by a perspective transformation and therefore has the properties of a cone (fixed angle of view), in which the greater the depth along the Z axis, the larger the area R becomes.

Meanwhile, the Z discriminator 35 marks out a spatial area φ of the kind illustrated by cutting the area of the cone, which spreads in this 3D space, at the Z-axis threshold values $z_1, z_2$ in front and in back of the fighter plane B'. As a result, the image (fighter plane B) within the spatial area φ is displayed clearly (in the focused state), and the images (fighter planes A and C) outside of the spatial area φ are displayed in a blurred state (in the defocused state).

In this example, part (the nose) of the fighter plane A is falls within the screen area R. However, since each item of pixel data (g,z) of this portion does not satisfy the condition $z_1 < z < z_2$, this fighter plane is displayed in the defocused state even though it falls within the 2D area R.

This agrees closely with the area of clear vision (focused state) when the user actually gazes at a point (fighter plane B') in 3D space. More specifically, the user's area of clear vision widens in 3D space at a fixed angle of view and an image in the range $z_1 \leqq z \leqq z_2$ usually is in clear focus in relation to depth. However, with regard to images in the ranges $z < z_1$, $z > z_2$, the eyes become defocused and the images appear (are sensed to be ) blurred.

Though the foregoing description utilizes the detected coordinates P(x,y) of the user's fixation point, a case is conceivable in which, depending upon the game, the user locks an aiming device (cursor, etc.), which is manipulated on the screen 71, onto a target (the fighter plane B). In this case it is possible to use the coordinates C(x,y) of the aiming device (cursor, etc.) on the screen instead of the detected coordinates P(x,y) of the fixation point. In such case the CCD camera 11 and fixation-point detector 12 can be eliminated.

In each of the foregoing embodiments, an example in which the invention is applied to an ordinary game machine used individually is described. However, the present invention is applicable also to a game machine implemented by a personal computer or the like as well as a game machine installed in an arcade or the like. In such case it goes without saying that the invention is applicable to a car race, shooting game, adventure game, roll-playing game or other types of game.

Further, in each of the foregoing embodiments, an example in which the invention is applied to a display unit (inclusive of a TV, etc.) is described. However, the present invention is applicable also to an output unit such as a printer of facsimile machine.

Further, the image data is not limited to CG image data based upon computer graphics. The invention can be applied also to image data that has been read by a scanner or TV camera.

Though a plurality of preferred embodiments of the present invention are described above, it goes without saying that the components, control and combinations thereof may be modified in various ways without departing from the idea of the present invention.

Thus, in accordance with the present invention, as described above, image data in a desired area within an output image can be subjected to image processing in a desired manner by a simple arrangement in which image processing of corresponding output image data g is executed in real time in accordance with the value of a function H(x,y) generated at a desired position in sync with XY read-out control of the image data.

**Claims**

1. An image output apparatus comprising:

    a memory for storing image data;
    a function generator which, in sync with control for reading out said image data to an output XY plane, generates a predetermined function H(x,y) at a desired position in the XY address space; and
    an image data processor which, on the basis of the value of said function H(x,y), subjects output image data of a corresponding address space to image processing that corresponds to the value of said function.

2. An image output apparatus according to claim 1, wherein the image data is image data of an image obtained by subjecting an image in three-dimensional space to a perspective transformation in relation to the output XY plane.

3. An image output apparatus according to claim 1 or 2, wherein the function H(x,y) is generated using externally input coordinates Q(x,y) in the output XY plane as a reference.

4. An image output apparatus according to claim 3, wherein coordinates Q(x,y) are detected coordinates P(x,y) of a fixation point of the human eye with respect to the output XY plane.

5. An image output apparatus according to claim 3, wherein coordinates Q(x,y) are coordinates C(x,y) of a point designated by external position input means.

6. An image output apparatus according to claim 3, wherein coordinates Q(x,y) are coordinates M(x,y) of a reference point representing a specific image all or a part of which is contained in an area in close proximity to the detected coordinates P(x,y) of the fixation point described in claim 4 or the coordinates C(x,y) of the designated point described in claim 5.

7. An image output apparatus according to claim 2, wherein output image data is accompanied by depth data representing depth along the Z axis in three-dimensional space of the image data, and the image data processor applies image processing, which conforms to the value of the function, to the corresponding output image data on the condition that said depth data falls within predetermined limits along the Z axis.

FIG. 1

FIG. 2

(A) BLOCK DIAGRAM

(B) TWO-DIMENSIONAL IMAGE OF H1 (x, y)

FIG. 3

LUMINANCE

$H_1(x, y15)$    $H_1(x, y16)$

1

0

X

Y

(A) THREE-DIMENSIONAL IMAGE OF $H_1(x, y)$

LUMINANCE

$H_1(x, yn)$

1

g

BK

HD (Yn)

0

X

X1                    X2

(B) TIMING CHART

FIG. 4

FIG. 5

FIG. 6

```
        ┌─────────────────────────────┐
        │      FIXATION-POINT          │
        │   DETECTION PROCESSING       │
        └─────────────────────────────┘
                     │
        ┌─────────────────────────────┐
        │ EXTRACT IMAGE DATA OF AREA BOUNDED │  S1
        │   BY UPPER AND LOWER EYELIDS  │
        │    OF LEFT AND RIGHT EYES     │
        └─────────────────────────────┘
                     │
        ┌─────────────────────────────┐
        │  GENERATE SMALLEST RECTANGULAR │  S2
        │        WINDOWS Wl, Wr         │
        │ ENCOMPASSING UPPER AND LOWER EYELIDS │
        └─────────────────────────────┘
                     │
        ┌─────────────────────────────┐
        │ OBTAIN HEIGHTS hl, hr OF RECTANGULAR │  S3
        │       WINDOWS Wl, Wr          │
        └─────────────────────────────┘
                     │
   ┌──────────────────────────────────────┐
   │ DETECT HORIZONTAL COORDINATES xl, xr OF PUPILS │  S4
   │  (OR CENTERS OF IRISES) IN WINDOWS Wl, Wr │
   └──────────────────────────────────────┘
```

Y $\langle$ REFERENCE MODE? $\rangle$ N — S5

S6

```
┌────────────────────────────────┐
│ ADOPT HEIGHTS hl, hr OF RECTANGULAR │
│ WINDOWS Wl, Wr AS REFERENCE OPENING │
│     LENGTHS Hl, Hr OF EYELIDS   │
└────────────────────────────────┘
```

```
┌────────────────────────────────┐
│ ADOPT HORIZONTAL COORDINATES xl, xr OF │
│   PUPILS (OR CENTERS OF IRISES) AS │
│    REFERENCE COORDINATE Xl, Xr  │
└────────────────────────────────┘
```
S7

S8

```
┌────────────────────────────────┐
│ OBTAIN DISPLACEMENTS OF EYELID  │
│ OPENINGS                        │
│        $\triangle hl = hl - Hl$ │
│        $\triangle hr = hr - Hr$ │
└────────────────────────────────┘
```

S9
```
┌────────────────────────────────┐
│ OBTAIN DISPLACEMENTS OF PUPILS  │
│   (OR CENTERS OF IRISES)        │
│        $\triangle xl = xl - Xl$ │
│        $\triangle xr = xr - Xr$ │
└────────────────────────────────┘
```

```
┌────────────────────────────────┐
│ OBTAIN FIXATION POINT x, y      │  S10
└────────────────────────────────┘
```

```
        ┌─────────────────────┐
        │      R E T U R N     │
        └─────────────────────┘
```

FIG. 7

10B

IMAGE EDITING UNIT

31c
31b
31a

hgc
hgb
hga

FILTERING
PROCESSOR

34

0
1 S
2 E
3 L

SL

g' → LB2 →g→

HD

X, Y

CORRECTION
FUNCTION GENERATOR

Y →(+)→ Y'
Yb → (−)

38a

HIGH-ORDER
ADDRESS
ROM
LOW-ORDER
ADDRESS

X →(+)→
Xb → (−)

X'

38

fb(x, y)

| 0.03 | 0.11 | 0.03 |
|------|------|------|
| 0.11 | 0.44 | 0.11 |
| 0.03 | 0.11 | 0.03 |

(a) FILTER 31b

Q(x, y)

(A) BLOCK DIAGRAM

Z ⊗ → X/H

Y/V

0, 0

0, 0          38a          71

0, 0

Y

Yn

Y'

Q(x, y)

Ym'

X'          Xm'

Ym

$Xb = x - \dfrac{Xm'}{2}$          X          Xm

$Yb = y - \dfrac{Ym'}{2}$

r

(B) TWO-DIMENSIONAL IMAGE OF $H_2(x, y)$

FIG. 8

DEFOCUSING INTENSITY

$H_2$ (x, y15)   $H_2$ (x, y16)

(A) THREE-DIMENSIONAL IMAGE OF $H_2$(x, y)

DEFOCUSING INTENSITY

(B) TIMING CHART

FIG. 9

FIG. 10

FIG. 11

FIG. 12

FIG. 13

EP 1 049 048 A1

FIG. 14

# INTERNATIONAL SEARCH REPORT

International application No.

PCT/JP98/05710

A. CLASSIFICATION OF SUBJECT MATTER
Int.Cl⁶ G06T17/00

According to International Patent Classification (IPC) or to both national classification and IPC

B. FIELDS SEARCHED

Minimum documentation searched (classification system followed by classification symbols)
Int.Cl⁶ G06T1/00-3/60, G06T13/00-17/40

Documentation searched other than minimum documentation to the extent that such documents are included in the fields searched

| Jitsuyo Shinan Koho | 1926-1996 | Toroku Jitsuyo Shinan Koho | 1994-1999 |
| Kokai Jitsuyo Shinan Koho | 1971-1996 | | |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO, 95/01609 (Sega Enterprises,Ltd.), 6 July, 1995 (06. 07. 95) & EP, 660266, A1 | 1 |
| X | JP, 6-301794, A (Matsushita Electric Industrial Co., Ltd.), 28 October, 1994 (28. 10. 94) (Family: none) | 1-7 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 12 March, 1999 (12. 03. 99) | 23 March, 1999 (23. 03. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)